(19) Europäisches Patentamt
European Patent Office
Office européen des brevets

(11) **EP 1 876 784 A1**

(12) **EUROPEAN PATENT APPLICATION**

(43) Date of publication:
**09.01.2008 Bulletin 2008/02**

(51) Int Cl.:
*H04L 27/26* [(2006.01)]     *H04B 3/32* [(2006.01)]

(21) Application number: **06450092.9**

(22) Date of filing: **05.07.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Ftw. Forschungszentrum Telekommunikation Wien Betriebs GmbH**
**1220 Wien (DE)**

(72) Inventors:
• **Statovci, Driton**
 **1160 Wien (AT)**
• **Nordström, Tomas**
 **1030 Wien (AT)**
• **Nilsson, Rickard**
 **1080 Wien (AT)**

(74) Representative: **Weiser, Andreas**
 **Patentanwalt,**
 **Hietzinger Hauptstrasse 4**
 **1130 Wien (AT)**

(54) **Method of optimizing bit rate capacities of DSL user lines**

(57)     A method of optimizing the bit rate capacities $(R_u)$ of DSL user lines $(u)$ subject to far-end crosstalk by adjusting the transmit power spectral densities $(P_u)$ at the far ends of the user lines by means of parameterized power back-off functions $(P_{u,R})$ is characterized by the steps of:

a) selecting a desired bit rate share $(p_u)$ for each user line $(u)$,

b) measuring the noise and losses $( \mathcal{N}_u^n , \mathcal{H}_{uu}^n )$ on each user line $(u)$, and

c) determining an individual set of power back-off parameters $(\alpha_u, \beta_u)$ for each user line $(u)$ by calculating a global sum $( \sum_{u=1}^{U} R_u )$ of the bit rates of all user lines and iterating the power back-off parameters $(\alpha_u, \beta_u)$ until a maximum value of the global sum $( \sum_{u=1}^{\bar{U}} R_u )$ is found under the constraint that the desired bit rate shares $(p_u)$ are met.

*Fig. 1*

Printed by Jouve, 75001 PARIS (FR)

**Description**

*Field* of *the Invention*

The invention relates to a method of optimizing the bit rate capacities of DSL user lines subject to far-end crosstalk by adjusting the transmit power spectral densities at the far ends of the user lines by means of parameterized power back-off functions. The invention further relates to a computer entity for a DSL network to this end.

DSL systems that use frequency division duplexing (FDD) transmission schemes for the downstream direction (from the central office or an intermediate cabinet to the user modem) and the upstream direction (from the user modem to the central office or cabinet), e.g. ADSL and VDSL, suffer from the so-called near-far problem. The near-far problem in DSL is defined as the process where modems located closer to the central office (CO) disturb modems located further away when transmitting in the upstream direction. This is due to far-end crosstalk (FEXT) couplings between user lines which are deployed close to one another, e.g. as twisted-pairs in the same cable bundle.

*Prior Art*

To solve the near-far problem in currently deployed DSL systems the concept of upstream power power-back off (UPBO) is used. With UPBO, modems located close to the central office are adjusted to reduce their transmitted power spectral densities (PSDs) in the upstream direction in order to improve the performance of modems located further away.

S. Schelstraete, "Defining upstream power back-off for VDSL," IEEE Journal on Selected Areas in Communications , vol. 20, no. 5, pp. 1064-1074, May 2002, gives an overview on current UPBO methods. Among these methods, the so-called "reference PSD" UPBO method has been standardized for VDSL and VDSL2 and is the method in use today.

According to this method "reference PSDs" are standardized, one for each upstream frequency band, which determine the maximum level of the received PSD. The level of each reference PSD in dBm/Hz, $\mathcal{P}_{\text{R\_dBm}}$, is parameterized and determined by two parameters $\alpha$ and $\beta$ as

$$\mathcal{P}_{\text{R\_dBm}}(f) = \alpha + \beta\sqrt{f}, \qquad\qquad [\text{dBm/Hz}], \qquad\qquad (2.1)$$

where *f* denotes the frequency in MHz. For instance, for VDSL which comprises two frequency bands per downstream and upstream direction, in total four parameters need to be determined for the two bands of the upstream direction.

The level of the transmitted PSD of a particular user line (user modem) *u* is determined based on the reference PSDs and by compensating for the insertion loss of the channel (channel transfer function) under the maximum PSD mask constraint, that is

$$\mathcal{P}_{\text{u\_dBm}}(f) = \min\left\{\mathcal{P}_{\text{R\_dBm}}(f) + 10\log_{10}\left(\mathcal{H}_u(f)\right), \mathcal{P}_{\text{dBm}}^{\text{max}}(f)\right\}, \qquad\qquad [\text{dBm/Hz}], \quad (2.2)$$

where $\mathcal{P}_{u\_\text{dBm}}$ denotes the transmitted PSD of user line *u* in dBm/Hz, $\mathcal{H}_u$ (*f*) denotes the squared magnitude of channel transfer function on line *u* and $\mathcal{P}_{\text{dBm}}^{\text{max}}$ denotes the maximum allowed transmit PSD mask in dBm.

According to the standard reference PSD UPBO model a global set of PBO parameters is used for all user lines of an entire DSL system, which set is computed as a compromise for large regions like North America and Europe based on empirical searches and the assumption of a common service mixture. This has the drawback that UPBO parameters are fixed no matter what the needs of the users and the actual network topology are.

In D. Statovci, T. Nordström, R. Nilsson and V. Oksman, "Revised Upstream Power back-off for VDSL", 31st International Conference on Acoustics, Speech and Signal Processing (ICASSP2006), Toulouse (France) May 14-19, 2006, an improvement of the reference PSD UPBO model has been proposed which makes it possible to calculate on-line a set of UPBO parameters for one cable bundle of user lines.

However, even with this improvement achieved, the following drawbacks still exist: None of the current methods is able to take into account individual user needs as to different bit rates for specific services, asymmetric and varying network topologies in the field and/or the individual noise environment of the user lines. This still limits the optimal practical utilization of the user line capacity which could theoretically be possible in a DSL system.

*Summary of the Invention*

It is an objective of the invention to overcome the above-mentioned drawbacks of the UPBO methods known hitherto and to devise an improved UPBO method which allows for an optimal utilization of the bit rate capacities of user lines in DSL systems.

This objective is achieved in a first aspect of the invention with a method of the above-mentioned kind, which method is characterized by the steps of:

a) selecting a desired bit rate share for each user line,
b) measuring the noise and losses on each user line, and
c) determining an individual set of power back-off parameters for each user line by calculating a global sum of the bit rates of all user lines and iterating the power back-off parameters until a maximum value of the global sum is found under the constraint that the desired bit rate shares are met.

With the invention the practical limits of the capacity utilization of the user lines is dramatically improved over the state of the art. The method of the invention is capable of on-line optimizing the set of UPBO parameters used in the modems. The set of optimized UPBO parameters is unique for each user line and therefore can take into account the individual quality-of-service needs of the user, the current network topology and the actual channel quality of the user line. In this way, a substantial increase of the bit rates can be achieved compared to the bit rates of conventional systems. All this is accomplished with little or no changes to currently deployed user modem technology so that the invention is applicable to all kinds of DSL standards and equipment, e.g. ADSL, ADSL2, VDSL, VDSL2 and any future DSL technology that can benefit from UPBO.

According to a preferred embodiment of the inventive method which is particularly suited for VDSL and VDSL2 where the frequency spectrum of each user line is divided into separate bands which are adjusted by individual power back-off functions, the set of power back-off parameters of each user line which is determined in step c) comprises individual subsets of power back-off parameters for each band. In this way, a so-called "dynamic spectrum management" can be made available with existing and readily available generations of VDSL and VDSL2 modems.

In a further preferred variant of the method of the invention the global sum is a weighted sum and step c) further comprises iterating the weights in order to meet the desired bit rate shares. This enables a particularly fast computation scheme which is suitable for on-line calculation and optimization of the PBO line parameter sets.

In a second aspect of the invention the above-mentioned objectives are achieved by a computer entity for a DSL network which is programmed in order to perform the method of the invention and to send the power back-off parameters determined to user modems at the far ends of the user lines for adjusting their upstream transmit power spectral densities.

Further features of the method and the computer entity of the invention are described in the subclaims and their details and advantages will become apparent from the following description of a preferred embodiment with reference to the enclosed drawings and annexes in which:

Figs. 1, 2a and 2b depict the entities involved in the DSL system according to the invention in block diagram form;
Fig. 3 shows the input and output interfaces of the PBO center of Fig. 2 performing the method of the invention; and
Annexes 1 and 2 list the algorithms of the method of the invention in pseudo-code form.

*Preferred Embodiment*

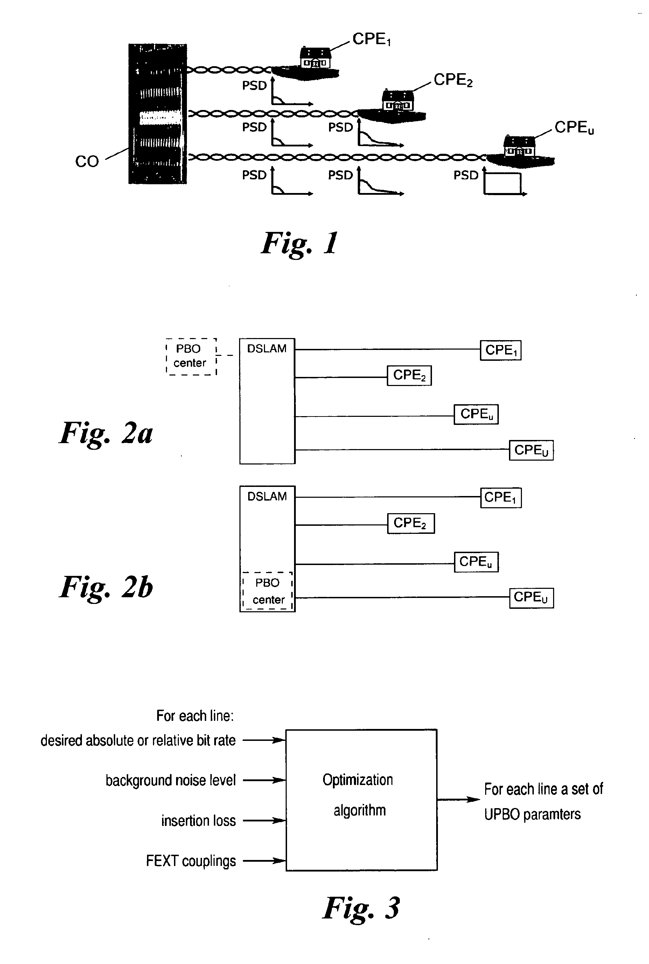

Fig. 1 shows a DSL system comprising customer premises equipments $CPE_u$ (u = 1 ... U), e.g. user modems, which are connected over user lines to a central office CO, more specifically to the digital subscriber line access multiplexers (DSLAMs) of the central office. CPEs on shorter lines must reduce their transmit power spectral densities (PSDs) in order not to disturb CPEs on longer lines by means of a parameterized upstream power back-off (UPBO) which is described in detail below. CPEs are capable of receiving such UPBO parameters from the CO and adjust their PSDs correspondingly.

Figs. 2a and 2b show two variants of the DSL system of Fig. 1. Both variants comprise a computer entity, in the following called "PBO center", one or more DSLAMs and one or more $CPE_i$ which are connected to the DSLAM(s) via individual user lines.

The PBO center operates either as a separate entity in the DSL network that communicates with the DSLAM (s) under its control (Fig. 2a) or as a logical part implemented within the DSLAM(s) (Fig. 2b).

The PBO center calculates a set of optimized PBO parameters which is unique for each user line, i.e. modem CPE$_i$. The following input is needed at the PBO center to perform the required calculation, see also Fig. 3:

- desired relative or absolute bit rates which shall be provided to each CPE$_i$;
- background noise level of each user line including the noise from the other DSL systems (non-VDSL systems) deployed in e.g. a cable bundle;
- measured insertion loss for each user line;
- measured far-end crosstalk (FEXT) couplings between all user lines in the bundle; optionally a generic FEXT model can be assumed or FEXT couplings are estimated on empirical data.

All this information can be provided to the PBO center using current technology: The network service provider knows in advance what bit rates it aims to offer to each customer; the background noise levels and insertion losses of the user lines can be easily measured on-line by the CPEs and/or the CO. If an online-measure of FEXT crosstalk couplings is not available, FEXT couplings can be estimated on the basis of empirical data constituting a generic FEXT model. All this information is made available at the PBO center without requiring changes e.g. in current VDSL standards. Based on this information the PBO center calculates an optimized set of UPBO parameters for each modem.

*Optimization Method*

The optimization method performed by the PBO center will now be described in detail. The optimization method calculates a set of UPBO parameters which is unique for each user line (modem) $u$. For example for VDSL systems with two upstream bands this set is $\{\alpha_{u,1},\beta_{u,1},\alpha_{u,2}\beta_{u,2}\}$ consisting of two subsets $\{\alpha_{u,1}\beta_{u,1}\}$ and $\{\alpha_{u,2},\beta_{u,2}\}$ where the subscripts 1 and 2 denote the first and the second upstream bands, respectively.

*1. Notation*

In the present description the following notation is used:

$\mathcal{P}_{u}$ denote the UPBO parameters in one parameter set (or subset).

$\mathcal{P}_{u}^{R}$ denotes the reference PSD of user line $u$.

$\mathcal{P}_{u}^{n}$ denotes the transmitted PSD of user line $u$.

$\mathcal{H}_{uv}^{n}$ denotes the transmitted PSD of user line $u$ on subcarrier $n$.

$\mathcal{H}_{uv}^{n}$ denotes the squared magnitude of the channel transfer function from user line $v$ to user line $u$ on subcarrier $n$, that is, it represents either the direct channel ($v=u$) or far-end crosstalk (FEXT) ($v \neq u$).

$R_u$ denotes the bit rate of user line in a DMT symbol; to find the bit rate in Mbit/s, this bit rate is multiplied with the number of DMT symbols transmitted in one second.

$R_u^n$ denotes the number of bits loaded on the subcarrier $n$.

$T_u^{\max}$ denotes the maximum power constraint for user line $u$.

*2. Prerequisites*

Based on the Shannon capacity formula, the number of bits loaded on subcarrier $n$ by user line $u$, for two-dimensional symbols, is

$$R_u^n = \log_2\left(1 + \frac{\mathcal{H}_{uu}^n \mathcal{P}_u^n}{\Gamma \mathcal{N}_u^n}\right) \qquad (6.1)$$

where $\Gamma$ is the signal-to-noise (SNR) gap, which for a given bit error rate and signal constellation represents the loss compared to the Shannon channel capacity; $\mathcal{P}_u^n$ denotes the transmitted PSD of user line $u$ on subcarrier $n$ ; $\mathcal{H}_{uu}^n$

denotes the squared magnitude of the direct channel of user line $u$ ; and $\mathcal{N}_u^n$ denotes the PSD of noise of user line $u$ on subcarrier $n$ calculated by

$$\mathcal{N}_u^n = \sum_{\substack{v=1 \\ v \neq u}}^{U} \mathcal{H}_{uv}^n \mathcal{P}_v^n + \mathcal{P}_{u,V}^n \qquad (6.2)$$

where $\mathcal{H}_{uv}^n$ denotes the squared magnitude of FEXT coupling from user line $v$ to user line $u$ on subcarrier $n$ and $\mathcal{P}_{u,V}^n$ denotes the PSD of the background noise of user line on $u$ on subcarrier $n$. $\mathcal{P}_{u,V}^n$ contains also noise from DSL systems not included in the optimization process.

The number of bits in a DMT symbol for user line $u$ in a particular transmission direction is calculated by

$$R_u = \sum_{n \in I} R_u^n \qquad (6.3)$$

where $I$ represents the set of subcarrier indices used in a particular transmission direction.

Although in the following the method of the invention is described for the upstream transmission direction only, the method can also be used to perform PBO in the downstream transmission direction. Such PBO parameters for the downstream direction are of course not the same as those for the upstream. The downstream power back-off could be used e.g. in DSL systems having intermediate cabinets (for example street cabinets or building cabinets) and user lines use e.g. the same cable bundle from the central office and the cabinets towards a plurality of customers.

*3. Bit Rate Relations*

The bit rates required by each user usually depend on the selected band plan, network topology (insertion losses and FEXT couplings), background noise level, and the PSDs of the other VDSL systems deployed e.g. on the same cable bundle. To this end each user line $u$ is assigned a bit rate share or priority value $p_u$ ($0 \leq p_u \leq 1$), respectively, which specifies how much of the total upstream cable capacity shall be assigned to the particular user line $u$. This concept is known per se from *D. Statovci, T. Nordström, and R. Nilsson,* "The Normalized-Rate Iterative Algorithm: A Practical Dynamic Spectrum Management Method for DSL", EURASIP Journal on Applied Signal Processing 2006 (2006), Article 95175.

Hence, the relation between the user line priorities and bit rates is specified as

$$\frac{R_1}{p_1} = \frac{R_2}{p_2} = \ldots = \frac{R_U}{p_U} \qquad (6.4)$$

with

$$\sum_{u=1}^{U} p_u = 1 \qquad (6.5)$$

If the user on line $u$ is not transmitting, then $p_u = 0$ and this user line is removed from (6.4).

The user line priority value of each user line $u$ is calculated based on the desired relative or absolute bit rates of all user lines as

$$p_u = \frac{\widetilde{R}_u}{\sum\limits_{u=1}^{U} \widetilde{R}_u} \qquad (6.6)$$

where $\widetilde{R}_u$ denotes the desired relative or absolute bit rate of user line $u$.

The method of the invention now uses these user line priority values $P_u$ to find the desired operating point (i.e. the bit rates of all user lines) since the quantities represented by these parameters are always related through (6.4) and (6.5).

*4. Optimization Goal*

The optimization goal of the method of the invention is to "jointly" maximize the bit rates for all user lines under the constraint that the bit rates of all user lines should satisfy the predefined relations in (6.4). Without this constraint user modems close to CO would achieve very high bit rates at the price of the distant user modems.

To be standard compliant the transmit PSD of each user is selected to have the shape determined by (2.2). Thus, the transmit PSD in each upstream band is determined by values of $\alpha$ and $\beta$. The optimization problem can then be formulated as:

$$\text{maximize} \ \sum_{u=1}^{U} R_u, \qquad (6.7a)$$

subject to:

$$\frac{R_1}{p_1} = \frac{R_2}{p_2} = \ldots = \frac{R_U}{p_U}, \qquad (6.7b)$$

$$\mathcal{P}_u^n = \min\left\{ \frac{\mathcal{P}_{u,R}^n}{\mathcal{H}_u^n}, \mathcal{P}_u^{n,\text{max}} \right\}, \quad \text{for each } u \text{ and } n \in I \qquad (6.7c)$$

$$\sum_{n \in I} \mathcal{P}_u^n \leq T_u^{\text{max}}, \quad \text{for each } u \qquad (6.7d)$$

where $\mathcal{P}_u^{n,\text{max}}$ denotes the maximum PSD mask constraint for user line $u$ in subcarrier $n$ and $\mathcal{P}_{u,R}^n$ incorporates the desired parameters $\alpha$ and $\beta$. In practice, the maximum transmit PSD mask constraint $\mathcal{P}_u^{\text{max}}$ is usually the same for all DSL systems of the same type. In DSL standards there is usually also a minimum transmit PSD mask constraint $\mathcal{P}_u^{\text{min}}$ which is set equal to background noise level (-140 dBm/Hz). Furthermore, the reference PSD, $\mathcal{P}_{u,R}^n$ on all subcarriers that belong to a particular upstream band follows the shape which is determined by $\alpha$ and $\beta$ values as given in (2.1). Thus, the optimization method searches for $\alpha$ and $\beta$ values for each user line such that the sum bit rates of all user lines is maximized as in (6.7a) while fulfilling the bit rate relations defined in (6.7b).

Let us assume for the moment being that the constraint (6.7b) is removed from the optimization problem (6.7). Under this assumption in DSL the optimization in (6.7) can be written as an optimization problem where the objective is to maximize the sum of weighted bit rates as follows:

$$\text{maximize} \quad \sum_{u=1}^{U} w_u R_u, \qquad\qquad (6.8a)$$

subject to:

$$\mathcal{P}_u^n = \min\left\{ \frac{\mathcal{P}_{u,R}^n}{\mathcal{H}_u^n}, \mathcal{P}_u^{n,\max} \right\}, \quad \text{for each } u \text{ and } n \in I \qquad (6.8b)$$

$$\sum_{n \in I} \mathcal{P}_u^n \leq T_u^{\max}, \quad \text{for each } u, \qquad\qquad (6.8c)$$

where $w_u$ denotes the "relative" weight given to user line $u$. Preferably the $w_u$ values are selected such that $\sum_{u=1}^{U} w_u = 1$.

We increase the bit rate of user line $u$ compared to the bit rates of the other user lines by increasing its $w_u$ value. At certain weighting values that satisfy the bit rate relations defined in (6.7b) the optimization problem (6.8) is equivalent to the optimization problem (6.7).

*5. Optimization Algorithm*

The method of the invention is based on the so-called dual decomposition optimization which uses Lagrange multipliers to deal with the constraints. Preferably, three levels of nested iterations are employed: The outer level searches for weighting values of user lines until the bit rate relations in (6.7b) are satisfied; the middle level searches for Lagrange multipliers that satisfy the total power constraints in (6.7d) and the constraint (6.7c); and the inner level searches for $\alpha$ and $\beta$ values that maximize the sum bit rates in (6.7a).
A pseudo-code of the method of the invention is listed in Annex 1 as Algorithm 1. In the following the task of each function in Algorithm 1 will be described.

*5.1 Main Function*

For a set of weighting values (or short: "weights") a set of bit rates is found which lies on the hull of the bit rate region. The bit rate region for $U$ user lines is $U$-dimensional. Since the hull of bit rate region in multi-user spectrum management is convex (see: R. Cendrillon, M. Moonen, J. Verliden, T. Bostoen, and W. Yu, "Optimal multi-user spectrum management for digital subscriber lines," in Proceedings of IEEE International Conference on Communications (ICC '04), vol. 1, pp. 1-5, Paris, France, June 2004), there exists only one set of weighting values which maximizes (6.8a) and satisfies the bit rate relations defined in (6.7b). Therefore, the task at hand is now to find a method to calculate the optimal weighting values that satisfies (6.7b).

Due to the assumption made in Section 4 that $\sum_{u=1}^{U} w_u = 1$, for a two-user case only the optimal weighting value of the first user line $w_1$ need to be searched since the weighting value of the second user line is calculated by $w_2 = 1 - w_1$. Furthermore, the optimal weighting value $w_1$ lies in the interval $[0,...,1]$. The weighting value $w_1$ is first initialized as $w_1 = 0.5$ and then a bisection search is used to find the optimal value of $w_1$. If $\dfrac{R_1}{p_1} < \dfrac{R_2}{p_2}$, $w_1$ is increased otherwise it is decreased based on the bisection search criteria.

For cases with more than two user lines the behavior of the bisection search is achieved with the pseudo-code of Algorithm 2 in Annex 2.

*5.2 CalcRate Function*

The weighting values of all user lines are kept fixed within this function due to our assumption. The so-called Lagrange is defined by incorporating the total power constraints from (6.8c) into the object function (6.8a)

$$L = \sum_{u=1}^{U} w_u R_u + \sum_{u=1}^{U} \lambda_u \left( T_u^{\max} - \sum_{n \in I} \mathcal{P}_u^n \right) \qquad (6.9)$$

where $\lambda_u$ denotes the Lagrange multiplier for user line $u$. From the theory of the Lagrange functions it is known that the Lagrange multiplier will be selected such that either the total power of user line $u$ satisfies $\sum_{n \in I} \mathcal{P}_u^n = T_u^{\max}$ or $\lambda_u = 0$. By collecting the terms that belong to the same subcarrier it can be shown that (6.9) can be written as

$$L = \sum_{n \in I} L^n + \sum_{u=1}^{U} \lambda_u T_u^{\max} \qquad (6.10)$$

where $L_n$ is the Lagrange on subcarrier $n$ and is given by

$$L^n = \sum_{u=1}^{U} w_u R_u^n - \sum_{u=1}^{U} \lambda_u \mathcal{P}_u^n \qquad (6.11)$$

Now the optimization problem (6.8) can be written as

$$\underset{\mathcal{P}_1^n,\dots,\mathcal{P}_U^n}{\text{maximize}} \ \ L\left( \mathbf{w}, \lambda, \mathcal{P}_1^n, \dots, \mathcal{P}_U^n \right) \qquad (6.12a)$$

subject to:

$$\mathcal{P}_u^n = \min \left\{ \frac{\mathcal{P}_{u,R}^n}{\mathcal{H}_u^n}, \mathcal{P}_u^{n,\max} \right\}, \ \ \text{for each } u \text{ and } n \in I, \qquad (6.12b)$$

where w=[$w_1$,...,$w_U$] and λ=[$\lambda_1$,...,$\lambda_U$].
The scheme to search for the optimal Lagrange multipliers is as follows. First, the Lagrange multipliers of all user lines are initialized as $\lambda_u = 2^m$, where $m \in 0 \cup \mathbf{Z}^+$. For calculated $\alpha_u$ and $\beta_u$ values in "CalcPBOBitloading Function" the PSD of user line $u$ is calculated as in (6.12b). Depending on used power the following steps are taken: as long as $\sum_{n \in I} \mathcal{P}_u^n > T_u^{\max}$ the Lagrange multiplier of user line $u$ is updated by $\lambda_u = 2\lambda_u$. Thereafter the bisection is used to search for the appropriate value of $\lambda_u$ within the range $\lambda_u^{\min} = 0$ and $\lambda_u^{\max} = \lambda_u$ until the total power constraint in (6.7d) is satisfied with a predefined accuracy. The Lagrange multipliers $\lambda_u$ are found by iterating many times among all user lines until there is no more change in the PSDs of the user lines.

*5.3 CalcPBOBitloading Function*

In this function the transmit PSDs of all user lines are calculated. Thus, for each user line a set of $\alpha_u$ and $\beta_u$ values is searched which maximize (6.12a) under the constraint (6.12b). Since the Lagrange function in (6.12a) is neither convex nor concave with respect to the power allocation, preferably an exhaustive search is used to find the appropriate $\alpha_u$ and $\beta_u$ values. To simplify the search the $\alpha$ values are preferably fixed to be equal to $\max\left(\mathcal{P}_{u\_\text{dBm},sb}^{\max}\right)$, where $\mathcal{P}_{u\_\text{dBm},sb}^{\max}$ denotes the maximum PSD constraint in dBm/Hz within the band sb. Thus, only optimized $\beta$ values need to be searched. In addition to the maximum transmit PSD mask constraint in DSL system also a minimum transmit PSD mask constraint $\mathcal{P}_u^{\min}$ can be defined which is preferably equal to the background noise level, thus $\mathcal{P}_u^{\min} = \mathcal{P}_{u,V}$. Based on the maximum and minimum transmit PSD values on each band and the definition of the reference PSD in (2.2), the maximum and minimum $\beta$ values are calculated as

$$\beta_{u,sb}^{\max} = \max\left(\frac{10\log\left(\mathcal{H}_u\left(f_{sb}\right)\right)}{\sqrt{f_{sb}}}\right) \qquad (6.13)$$

$$\beta_{u,sb}^{\min} = \min\left(\frac{10\log\left(\mathcal{H}_u\left(f_{sb}\right)\right) - \max\left(\mathcal{P}_{u,sb}^{\max}\left(f_{sb}\right)\right) + \min\left(\mathcal{P}_{u,sb}^{\min}\left(f_{sb}\right)\right)}{\sqrt{f_{sb}}}\right) \qquad (6.14)$$

where $f_{sb}$ denotes the frequencies within the band sb. Thus, the optimum value of $\beta_{u,sb}$ lies in the interval $\left[\beta_{u,sb}^{\min}, \beta_{u,sb}^{\max}\right]$. The optimal value of $\beta_{u,sb}$ in the given interval is searched exhaustively with a predefined search step $\Delta\beta$. For each value of $\beta_{u,sb}$ the bit loading within the given band is calculated as in (6.1) and the Lagrange $L_{sb}$ of the band *sb* is calculated by

$$L_{sb} = \sum_{n \in I_{sb}} L^n \qquad (6.15)$$

where $I_{sb}$ denotes the set of subcarriers within the band *sb* and $L^n$ is defined in (6.11).

The invention is not limited to the exemplary embodiments given herein but encompasses all variants and modifications which fall into the scope of the appended claims. For example, instead of the preferred and particular advantageous optimization algorithms presented herein also other optimization methods apparent to the man skilled in the art could be used to find the maximum value of the global bit rates sum under the constraints mentioned above in order to determine the optimal PBO parameter sets or subsets for each user line. Also, instead of the parameterization given in (2.1) various other forms of reference PSDs could be used, e.g.

$$\mathcal{P}(f) = \alpha + \beta\sqrt{f} + \gamma f,$$

which would lead to PBO parameter sets with three parameters $\alpha$, $\beta$ and $\gamma$ per user and band, or any other parameterization which may be deemed useful by the man skilled in the art.

*Annex 1*

*Algorithm 1:*

*Preset values*
$p_1,\ldots,p_U$

**Main Function**
*Initialize* : $\mathbf{w} = [w_1,\ldots,w_U]$
*repeat*
   $\mathbf{R} = \mathbf{CalcRates}(\mathbf{w})$, where $\mathbf{R} = [R_1,\ldots,R_U]$
   update $\mathbf{w}$ as in Algorithm 2
*until* the bit rates of all users satisfy the defined bit rate
     relations in (6.4) with a predefined accuracy

**CalcRates Function**
*Initialize* : $\lambda = [\lambda_1,\ldots,\lambda_U]$ and $\mathcal{P}_u$, for $u = 1,\ldots,U$
*repeat*
  *for* $u = 1$ to $U$
    Calculate noise $\mathcal{N}_u$ as in $(6.2)$
    *repeat*
      $[\alpha_u\text{'s}, \beta_u\text{'s}, R_u^n\text{'s}] = \mathbf{CalcPBOBitloading}(u, \mathcal{N}_u, \mathbf{w}, \lambda)$
      Update $\mathcal{P}_u$ from $\alpha_u$'s and $\beta_u$'s as in $(6.7c)$
      Update $\lambda_u$ based on $(6.7d)$
    *until* the total power constraint in $(6.7d)$ is satisfied
  *endfor*
*until* the power allocations of all users have reached a predefined accuracy
Calculate $R_u = \sum_{n\in I} R_u^n$ for $u = 1,\ldots,U$.

**CalcPBOBitloading Function**
{For given fixed $\alpha$'s}
*Initialize* : $\Delta\beta$
*for* $sb = 1$ to $Nrsb$ {$Nrsb$ denotes the number of bands}
  Calculate $\beta_{u,sb}^{\min}$ and $\beta_{u,sb}^{\max}$ from $\mathcal{P}_{u,sb}^{\max}$ and $\mathcal{P}_{u,sb}^{\min}$ values
  within the band $sb$ as in (6.13) and (6.14)
  *for* $\beta_{u,sb} = \beta_{u,sb}^{\min}$ to $\beta_{u,sb}^{\max}$ with step $\Delta\beta$
    *Initialize* : $L_{sb}^{\max} = -\infty$
    Calculate $\mathcal{P}_{u,R}$ as in $(2.1)$
    Calculate $\mathcal{P}_u$ as in $(6.7c)$
    $L_{sb} = 0$ {Lagrangian}
    *for* $l = 1$ to $K$
      Calculate bitloading as in $(6.1)$ and Lagrangian as in $(6.9)$
    *endfor*
    *if* $L_{sb} \geq L_{sb}^{\max}$
      $L_{sb}^{\max} = L_{sb}$
      Update PBO parameters for user $u$ with new $\beta_{u,sb}$ value
      Update bitloading for user $u$ from the updated $\mathcal{P}_u$ values
    *endif*
  *endfor*
*endfor*

*Annex 2*

*Algorithm 2:*

> **Update weighting values**
>
> *Initialize* : $w_u = \dfrac{1}{U}$, for $u = 1,\ldots,U$
>
> $\Delta w_u = \dfrac{1}{2U}$, for $u = 1,\ldots,U$
>
> Calculate: $R_1, R_2, \ldots, R_U$ as desribed in Algorithm 1
>
> Calculate: $\dfrac{R_1}{p_1} = \dfrac{R_2}{p_2} = \ldots = \dfrac{R_U}{p_U}$, with $\displaystyle\sum_{u=1}^{U} p_u = 1$
>
> Calculate: $\sigma_u = sign\left( \dfrac{1}{U} \displaystyle\sum_{u=1}^{U} \dfrac{R_u}{p_u} - \dfrac{R_u}{p_u} \right)$, for $u = 1,\ldots,U$
>
> Update: $w_u = w_u + \Delta w_u \sigma_u$, for $u = 1,\ldots,U$
>
> If $w_u < 0$ replace it with a small positive non-zero value
>
> Normalize: $w_u = \dfrac{w_u}{\displaystyle\sum_{u=1}^{U} w_u}$ for $u = 1,\ldots,U$ to satisfiy $\displaystyle\sum_{u=1}^{U} w_u = 1$
>
> Replace: $\Delta w_u = \dfrac{\Delta w_u}{2}$ when the sign of $\sigma_u$ changes between two iterations

**Claims**

1. A method of optimizing the bit rate capacities ($R_u$) of DSL user lines ($u$) subject to far-end crosstalk by adjusting the transmit power spectral densities ( $\mathcal{P}_u$ ) at the far ends of the user lines by means of parameterized power back-off functions ( $\mathcal{P}_{u,R}$ ), **characterized by** the steps of:

   a) selecting a desired bit rate share ($P_u$) for each user line ($u$),

   b) measuring the noise and losses ( $\mathcal{N}_u^n$ , $\mathcal{H}_{uu}^n$ ) on each user line ($u$), and

   c) determining an individual set of power back-off parameters ($\alpha_u$, $\beta_u$) for each user line ($u$) by calculating a global sum ( $\displaystyle\sum_{u=1}^{U} R_u$ ) of the bit rates of all user lines and iterating the power back-off parameters ($\alpha_u$, $\beta_u$) until a maximum value of the global sum ( $\displaystyle\sum_{u=1}^{U} R_u$ ) is found under the constraint that the desired bit rate shares ($p_u$) are met.

2. The method according claim 1 wherein the frequency spectrum of each user line ($u$) is divided into separate bands (*sb*) which are adjusted by individual power back-off functions ( $\mathcal{P}_{u,R}$ ),**characterized in that** the set of power back-off parameters of each user line (*u*) determined in step c) comprises an individual subset of power back-off parameters ($\{\alpha_{u,sb}, \beta_{u,sb}\}$) for each of the separate bands (*sb*).

3. The method according to claim 1 or 2, **characterized in that** the global sum is a weighted sum $\left( \sum_{u=1}^{U} w_u R_u \right)$ and that step c) further comprises iterating the weights ($w_u$) in order to meet the desired bit rate shares $(p_u)$.

4. The method according to claim 3, **characterized in that** step c) is performed in at least two nested iteration loops, wherein the outer loop comprises the iteration over the weights ($w_u$) and the inner loop comprises the iteration over the power back-off parameters ($\{\alpha_u,\beta_u\}$; $\{\alpha_{u,sb},\beta_{u,sb}\}$).

5. The method according to any of the claims 1 to 4, wherein the upstream power spectral density of each user line is subject to maximum and/or minimum power constraints, **characterized in that** the finding of the maximum value $\left( \max \sum_{u=1}^{U} R_u \right)$ in step c) is also subject to these power constraints ( ( $T_u^{\max}$ , $\mathcal{P}_u^{\max}$ , $\mathcal{P}_u^{\min}$ ).

6. The method of claims 4 and 5, **characterized in that** step c) comprises a third iteration loop nested in between the first and second loops wherein the power constraints ( $T_u^{\max}$ , $\mathcal{P}_u^{\max}$ , $\mathcal{P}_u^{\min}$ ) are represented by Lagrange multipliers ($\lambda_u$) which are iterated.

7. The method according to any of the claims 1 to 6, **characterized in that** the line noise ( $\mathcal{N}_u^{n}$ )includes the background noise ( $\mathcal{P}_{u,V}^{n}$ ) of the user line (*u*) and the crosstalk noise $\left( \sum_{\substack{v=1 \\ v \neq u}}^{U} \mathcal{H}_{uv}^{n} \mathcal{P}_v^{n} \right)$ from the other user lines (*u*).

8. The method according to claim 7, **characterized in that** the background noise is measured and the crosstalk noise is estimated on the basis of empirical data.

9. The method according to any of the claims 1 to 8 wherein the power back-off functions are parameterized in the form $\mathcal{P}(f) = \alpha + \beta \sqrt{f}$ , **characterized in that** in step c) the parameters $\alpha$ are kept constant and the parameters $\beta$ are iterated.

10. A computer entity for a DSL network, programmed in order to perform the method of any of the claims 1 to 9 and to send the power back-off parameters determined ($\{\alpha_u,\beta_u\}$; $\{\alpha_{u,sb},\beta_{u,sb}\}$) to user modems at the far ends of the user lines (*u*) for adjusting their upstream power spectral densities ( $\mathcal{P}_u$ ).

**Fig. 1**

**Fig. 2a**

**Fig. 2b**

For each line:

desired absolute or relative bit rate ⟶

background noise level ⟶

insertion loss ⟶

FEXT couplings ⟶

Optimization algorithm

⟶ For each line a set of UPBO paramters

**Fig. 3**

| | European Patent Office | EUROPEAN SEARCH REPORT | Application Number |
|---|---|---|---|
| | | | EP 06 45 0092 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CENDRILLON R ET AL: "Iterative spectrum balancing for digital subscriber lines" COMMUNICATIONS, 2005. ICC 2005. 2005 IEEE INTERNATIONAL CONFERENCE ON SEOUL, KOREA 16-20 MAY 2005, PISCATAWAY, NJ, USA,IEEE, 16 May 2005 (2005-05-16), pages 1937-1941, XP010826210 ISBN: 0-7803-8938-7 * paragraphs [00II], [0III], [000V] * ----- | 1-10 | INV. H04L27/26 H04B3/32 |
| A | EP 1 670 202 A (CIT ALCATEL [FR]) 14 June 2006 (2006-06-14) * the whole document * ----- | 1-10 | |
| A | WEI YU ET AL: "Dual optimization methods for multiuser orthogonal frequency division multiplex systems" GLOBAL TELECOMMUNICATIONS CONFERENCE, 2004. GLOBECOM '04. IEEE DALLAS, TX, USA 29 NOV.-3 DEC., 2004, PISCATAWAY, NJ, USA,IEEE, vol. 1, 29 November 2004 (2004-11-29), pages 225-229, XP010758885 ISBN: 0-7803-8794-5 * the whole document * ----- | 1-10 | TECHNICAL FIELDS SEARCHED (IPC) H04L H04B |

The present search report has been drawn up for all claims

| Place of search | Date of completion of the search | Examiner |
|---|---|---|
| Munich | 31 January 2007 | Giglietto, Massimo |

EPO FORM 1503 03.82 (P04C01)

**ANNEX TO THE EUROPEAN SEARCH REPORT
ON EUROPEAN PATENT APPLICATION NO.**

EP 06 45 0092

This annex lists the patent family members relating to the patent documents cited in the above-mentioned European search report.
The members are as contained in the European Patent Office EDP file on
The European Patent Office is in no way liable for these particulars which are merely given for the purpose of information.

31-01-2007

| Patent document cited in search report | | Publication date | Patent family member(s) | | Publication date |
|---|---|---|---|---|---|
| EP 1670202 | A | 14-06-2006 | CN | 1801675 A | 12-07-2006 |
| | | | US | 2006153178 A1 | 13-07-2006 |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **S. SCHELSTRAETE.** Defining upstream power back-off for VDSL. *IEEE Journal on Selected Areas in Communications,* May 2002, vol. 20 (5), 1064-1074
- **D. STATOVCI ; T. NORDSTRÖM ; R. NILSSON ; V. OKSMAN.** Revised Upstream Power back-off for VDSL. *31st International Conference on Acoustics, Speech and Signal Processing (ICASSP2006,* 14 April 2006

- **R. CENDRILLON ; M. MOONEN ; J. VERLIDEN ; T. BOSTOEN ; W. YU.** Optimal multi-user spectrum management for digital subscriber lines. *Proceedings of IEEE International Conference on Communications (ICC '04,* June 2004, vol. 1, 1-5